# EUROPEAN PATENT APPLICATION

(11) **EP 2 006 399 A1**
(43) Date of publication of application: **24.12.2008**
(21) Application number: 07711098.9
(22) Date of filing: 23.02.2007
(51) Int. Cl.: C22B 1/00, C22B 23/00

(54) **METHOD FOR INCREASING THE PERCENTAGE OF ARGILLACEOUS AND LIMONITIC MINERAL SOLIDS IN PULP SUPPLIED TO AUTOCLAVES IN PRESSURISED ACID LEACHING**

(30) Priority: 24.02.2006 CU 6004006; 24.02.2006 CU 6004106; 24.02.2006 CU 6004206
(71) Applicant: CENTRO DE INVESTIGACIONES Y PROYECTOS PARA LA INDUSTRIA MINERO METALURGICA, Habana 10800 (CU)
(72) Inventor: CASTELLANOS SUÁREZ, José, Habana 10200 (CU); ALFONSO OLMO, Esteban Luis, Habana 10400 (CU); MONTEJO SERRANO, Emilio, Andrés, Habana 12500 (CU); HERNÁNDEZ MARTÍNEZ, Alejandra Naida, Provincia Habana 32500 (CU); PÉREZ PÉREZ, Misael, Habana 11500 (CU); BUGALLO DAVIS, María de Fatima, Santo Suarez. Municipio 10 de Octubre Habana 10500 (CU); ALCALÁ FARIÑAS, Rubén Bruno, Habana 11900 (CU); BERTO ROMERO, Juan, Habana 10900 (CU)
(74) Representative: Carpintero Lopez, Francisco
(86) International application number: PCT/CU2007/000004
(87) International publication number: WO 2007/095866

(57) **Abstract**

The present invention is related to the processing of lateritic, nontronitic, limonitic, smectitic and clay minerals via hydrometallurgy, specifically with the pressure acid leaching and consists in the direct preparation of pumpable pulps with high % solids of raw mineral before their feeding to the autoclaves. The pulp is submetted to the deaggregation process to achieve stable pulps with a viscosity of 60 - 200 Pa, good fluidity and a high % solids (45 - 47), with the addition of different types of additives to increase the % solids up and including 47 - 52%.

## Description

This invention is related to the non ferrous hydrometallurgy, in particular, with the direct production of the aquous pulp of minerals containing Ni + Co, before their feeding to the autoclaves in the pressure acid teaching process. It can be applied to any kind of limonitic, nontronitic, smectitic, lateritic minerals and to minerals where the clay, serpentine and other minerals content vary from a 2 to 60% and the magnesium content varies from 0.1 to 8.0%.

A novel method is described to prepare pulps with high % solids (47-52) depending on the type of mineral. This gives the pulp special characteristics, good fluidity and viscosity to be pumped. For the limonitic minerals, deaggregation without additives is used, while for the nontronitic, smectitic and lateritic minerals the method used is the deaggregation with additives.

The direct pulp preparation with high % solids achieves a 39 - 41% solids for nontronitic minerals, 33-35% solids for clay minerals and 45 - 47% solids for limonitic minerals. However, due to the rheological characteristics of the pulps of the mineral being processed, these concentrations can not always be achieved.

The process used nowadays has a plant for pulp preparation with 20 - 25% solids and some settlers to thicken the pulps before feeding the settlers. As the high pressure

There is a considerable number of documents, thesis, patents, etc. referring to flocculation and decantation of mineral pulps as well as to mineral treatments. However, the strict application of the proceedings so described to the gamieritic oxidized niqueliferous minerals is translated in a total inefficiency or in a forbiding cost to carry them out. In the French invention patent 2 320 781, a flocculation method is described that consists in adding 1500 g/Ts of flocculant after taking the pH to a 6.7 value.The pulps so flocculated are decanted very slowly because the necessary decantation area, calculated according to Kyrtch Roberts method, is 45 - 46 m² /Ts/h. duplicating the subverse concentration (thickened pulp) that goes from a 10% of dry material to a 20% of dry material per pulp kg. Such a proceeding is economically unapplicable and generates very high costs in flocculants and enormous areas for decantation.

The technology used in the Murrin Murrin Nickel Plant, in Australia, operates with nontronitic mineral in a direct pulp preparation plant, at boiling temperature, achieving only a final pulp with a 39 - 41% solids when the plant can process mineral to achieve 43 - 45% solids, which limits the Ni and Co production.

The minerals of San Felipe deposit, in Cuba, have a clay content of 45 to 60%, being the main minerals of smectitic, type. The settling assays carried out have demonstrated that only a 28% of solids could be achieved and through direct preparation of pulp, using water, only a 37 to 39% solids and using hypersaline water, a 33% solids. This leads to have a larger autoclaves plant.

When applying the proposed invention, the preparation of stable pulps with a high percent solids (45 - 47%) can be achieved, getting also an increase in the % solids up to 47-52%, amount that has never been achieved before in the state of techniques, by adding additives to the pulp in the deaggregation process, which gives an improvement in the characteristics of the pulps by turning them into more fluid ones and with good viscosity to be pumped when Ni and Co bearing ores of the lateritic, nontronitic, limonitic and clay minerals are used.

This way, the invention has as main objective the preparation of pulps with high % solids (45 - 47) using a deaggregation drum and the increase of that percent (47 - 52) in correspondence with the characteristics of the mineral and the additive used, which leads to an increase in the Ni + Co production by processing more mineral in the classic processes of high pressure acid leaching, where it is not possible to instal new settlers, which also permits to significantly decrease the cost of the invention.

Another pobjetctive is the direct pulp preparation with 45 - 47% solids that can be stable and fluid, submitting the pulp only to the deaggregation process, through the use of a deaggregation drum (balls or bars mill) that has the dimensions, rotary speed and the adequate load to avoid the grinding of the rejection or the not wished materials, according to the mineralogical composition of the kind of mineral being processed.

A third objective is to increase the % solids in pulp to a 46 - 52% by using alternative A, making the pulp go to the deaggregation process and adding additives that in this case, are metalic salts in an aquous solution such as the Al₂ (SO₄)₃ H₂SO₄, MnSO₄ H₂SO₄ in quantities equivalent to, which leads to obtain pulps with the adequate viscosity for plumping.

In the third objective (increase of the % solids to 46 - 52%) using the alternative where pulp is taken to the desaggregation process with an additive obtained as a by-product of the leaching process itself, among which we have the ACLIX (leached limonite plus sulfuric acid), WL (waste liquor from the Ni + Co precipitation, ACWA (sulfuric acid + WL and the ACTAIL (acid liquor of ferric sulphate), resulting from the leaching tailings of the acid leaching process of limonites.
The last objective is the application of this proceeding with its alternatives to increase the Ni + Co production in high pressure acid leaching where it is not posible to install new settlers, so decreasing significantly the costs of the investment. pulps. Another novelty is the increased in the percent solids produced in the pulps after deaggregation, when adding any of the additives used in the two alternatives, which also has a favorable change in the rheological characteristics of the pulp, whithout a significant impact in the minerals' mineralogy and permits to obtain pulps that can be pumped, efficiently classified, with high % solids (46 - 50), good fluidity and viscosity, reporting a rejection with low content of the final product.

The direct pulp preparation with high % solids can be implemented in the following two ways:
1- Carrying out the direct pulp preparation in a deaggregation drum with the controlled unit energy supply without additive, for the case of the limonitic minerals.
2- Carrying out the direct pulp preparation in a deaggregation drum with the controlled unit energy supply and the addition of a selected additive from the group of those described in the invention, for the case of the nontronitic, smectitic, lateritic minerals and also for those minerals where the clay, serpentine and other minerals content varies from 2 to 60 % and the magnesium content rates from 0.1 and 8.0%. This way, a 3 - 5% solids can be achieved in the acid leaching processes, besides, you obtain stable pulps, with good fluidity and viscosity to be pumped, reporting a rejection with low content of the final product.

### Prowess 1:

To a deaggregation drum (balls or bars mill) of 5 L capacity, with a 1 - 8 bars load, add 1 kg of the mineral and the necessary water to have a pulp with 45 - 47% solids. It must rotate at 30 - 50 rpm for 10 to 30 minutes. Pulp is then taken out of the drum and classified under 1 mm. The pulp obtained keeps the same density and acquires special characteristics as viscosity (60 - 200) and good fluidity for pumping them to the autoclaves of the leaching process.

### Process 2:

To the deaggregation drum (balls or bars mill) of 5 L capacity, with a 1 - 8 bars load, add 1 kg of the mineral and the necessary water or WL (waste liquor from the Ni + Co precipitation), needed to obtain a 45 - 47% solids and the additive selected from the group described in the invention. It must rotate at 30 - 50 rpm for 1 to 60 minutes. Pulp is then extracted and classified under 1 mm) and the % solids is determined by drying. The final pulp reported an increase of 47 - 52% solids, a waste of 1 - 4%, a viscosity of 60 - 180 Pa and good fluidity to be pumped to the autoclaves of the acid leaching process.

Classification and dose of the additives used in Process 2.

**Table 1**

| Classification | Type of Additive | Dose |
|---|---|---|
| ACLIX | Leached limonite plus H₂SO₄ | From 20-50 L/t of leached limonite and 1 - 9 kg/ t H₂SO₄ |
| ACWA | Waste liquor from Ni + Co precipitation plus H₂SO₄ | From 10-70 L/t of acid liquor plus 1 - 9 kg/t H₂SO₄ |
| ACTAIL | Acid liquor (ferric sulphate) resulting from the leaching of the plant's tailings of wash with H₂SO₄ plus sulfuric acid. | From 20 - 50 L/t of acid liquor and 2 - 5 kg/t H₂SO₄ |
| AC | Sulfuric acid | 2 - 6 kg/t |
| Al₂(SO₄)₃ 13 H₂O | Aluminum salts + sulfuric acid | 0.1 - 5 kg/t of Al₂(SO₄)₃ 13 H₂O and 1 -3 kg of H₂SO₄ |
| Al(OH)⁻₃ | Aluminum hydroxide + sulfuric acid | 0.5 - 7 kg/t |
| MnSO₄ | Manganese sulfate + sulfuric acid | 1-5 kg/t of MnSO₄ and 1 - 3 kg/t of and H₂SO₄ |

### Advantages of the invention

The advantages of this invention are given in the direct pulp preparation with high percent solids (45 - 52%) which are pumpable, and this represents an increase in the Ni + Co production, achieving an increase of 3 - 5 % solids when processing a larger quantity of mineral. The reduction of the capital invention is achieved in a 10 - 12% for not using settlers in the high pressure leaching technology.

Another advantage is that the proceeding is simple to install, applicalbe for all kinds of Ni + Co bearing ores of the limonitic, nontronitic, smectitic, lateritic and of minerals where the clay, serpentine and other minerals content varies from 2 to 60% and the magnesium content between 0.1 and 8.0 %. Besides, depending on the characteristics of the mineral, the optimum parameters must be adjusted in pilot scale tests in the rates established by the method.

Another advantage is the favorable change that occurs in the rheological characteristics of the pulp when using this method, as it gives the pulp a viscosity and fluidity adequate for pumping.

The exploitation of the waste liquor (WL) when directly used in the additive composition or as a substitute for water to make the pulp, is also considered advantageous.

### Example of the realization for Process 1

### Example 1:

One kg (1 kg) of limonitic mineral was loaded to the deaggregation drum of the laboratory which contained the necessary water to obtain a pulp with 47% solids.

The drum had bars (1 - 8 bars). The operation lasted (3-10) minutes and the pulp was taken out of the drum and classified under one milometer.

The pulp reported 46.9 % solids and a viscosity of 190 Pa, having also good fluidity. The rejection was 2.8% of the weight.

### Example 2:

The drum was loaded with 1 kg of limonitic mineral and the necessary water to obtain a pulp with 46% soids. The experiment lasted (1 - 10) minutes but using balls (1 -3) as deaggregation element and the deaggregation lasted 10 minutes.

The final pulp had a 47% solids and a viscosity of 210 Pa, with a rejection of 2,5%, it could be pumped and potentially classifyable in a 1 mm mesh.

### Example 3:

A continuous test at pilot plant scale was carried out with the feeding of 45 kg/h. A bar was loaded and the deaggregation time was 30 minutes. The final pulp had a 45.5% solids and a viscosity of 80 Pa.

### Examples of realization for process 2 (deaggregation with additives).

### Example 4:

Water was added to the drum to obtain a pulp with 47% solids.

Bars (1 - 8 bars) were loaded to the drum and one (1kg) kg of limonitic ore was also loaded. 30 L/t of mineral, ACLIX (leached limonite with 600 kg/acid/t) and 4.6 kg/t of H₂SO₄ were dosed into the drum. The deaggregation process lasted (1 - 15) minutes. The pulp was classified under one milimeter and the viscosity and the % solids by drying were determined.

The pulp reported 47.3% of solids and a viscosity of 160 Pa, being fluid and pumpable.

### Example 5:

Bars were placed in the drum (1-8 bars) and the necessary water to obtain pulps with 47% solids. One (1) kg limoite was loaded to the drum. 25 L/t of mineral, ACLIX (leached limonite with 600 kg acid/ton) and 5 kg /t of H₂SO₄ were dosed. Deaggregation was carried out for (1 -10) minutes. Pulp was classified under one milimeter. The % solids by drying and the viscosity were determined.

The pulp had 46,5% solids and 120 Pa. During classification and separation of the rejected materials (2.7%), it was observed that the pulp had good fluidity and was pumpable.

### Example 6:

A test was carried out at continuous pilot scale with a feeding flow of 45 kg/h of mineral. 37 L/t of ACLIX and 3 kg/t of acid were dosed. Inside the deaggregation drum the density of the pulp kept on 47 to 50 %. The final pulp was classified under one (1) milimeter. All the pulp produced in 6 hours of continuous operation was stored and a composite sample was taken, reporting 47% solids and a viscosity of 150 Pa, It was checked out that the pulp was pumpable and could be easily classified, separating fraction +1mm from the rejection (3.0% in weight) with a very low limonite drag.

### Example 7:

From 1 to 8 bars were loaded to the drum as well as the necessary water to obtain a pulp with 47% solids. Immediately 1 kg of the limonitic ore, from Moa's plant, was loaded too. The additive ACWA (formed by 47L /t of WL and 9 kg/t H₂SO₄) were loaded. The deaggregation lasted 10 minutes.

The final pulp was classified under 1 mm and the % solids by drying and viscosity were determined.

The pulp reported 47.5% solids and 120 Pa. The rejecton was 4.0% in weight.

A similar assay, but without additives, reported an under 1 mm pulp (after classification), of 45% solids and a viscosity of 200 Pa.

### Example 8:

The deaggregation drum was prepared with a load of (1 - 8 bars) and WL in a quantity equivalent to the necessary water to obtain a 45% solids for one (1) kg of mineral from the San Felipe Deposit. A deaggregation test was carried out for (1 - 15) minutes, getting a final pulp which was then classified under 1 mm with a 45% solids and 90 Pa. The test was repeated but without the additive. The final pulp had only a 39% solids and a viscosity of 90 Pa.

### Example 9:

An assay was carried out under the same conditions as example 8. The additive was substituted and the waste liquor from the Ni+Co sulfide precipitation was used in a rate of 47 L/t of mineral and 6 kg of H₂SO₄. The pulp classified under 1 mm reported 48.6% solids and a viscosity of 130 Pa.

### Example 10:

A test similar to Example 6 was carried out, but using the additive ACWA (with a rate of 30 L/t WL + 5 kg/t H₂SO₄). The final pulp classified under 1 mm had a 47% solids and a viscosity of 150 Pa.

### Example 11:

One kg of limonitic ore was loaded to the deaggregation drum of the laboratory, which already contained the water necessary to obtain a 47% solids pulp. 7 kg/t of additive Al₃(SO₄)₃ - 13 H₂O + H₂SO₄ were added.

The drum had from (1-8 bars). The opertion lasted from 1 - 10 minutes and the pulp extracted was classified under 1 mm (-1mm). It reported a 46.7% solids and a viscosity of 160 Pa, keeping a good fluidity and the rejection was 2.7% of the weight.

### Example 12:

Same experiment as No. 11, but adding a higher quantity of the additive Al₂(SO₄)₃ - 13 H₂O + H₂SO₄ in this case, 8.5 kg/t. The pulp reported a 47% solids and a viscosity of 150 Pa, being fluid and pumpable.

### Example 13:

One kg of limonitic ore was fed to the deaggregation drum of the laboratory, which contained the necessary water to obtain a pulp of 47% solids. 6 kg of /t of the additive Al (OH)₃ + H₂SO₄ was added.

The drum contained from (1 - 8 bars). The operation lasted from 1-10 minutes, the pulp was taken out and classified under (-1mm). It reported 47% solids and a viscosity of 150 Pa, keeping good fluidity and the rejection was 2.7% of weight.

### Example 14:

A test at continuous pilot plant scale was carried out with the feeding of 45 kg/h of mineral and 6 kg/t of the additive Al₂(SO₄)₃ . 13 H₂O + H₂SO₄ inside the deaggregation drum that kept a pulp density between 47 and 50 %. The final pulp was classified under one mm., all the pulp produced for 6 hours was storage. Afterwards, a composite sample was taken to determine the % solids and the viscosity, reporting a 48% and 150 Pa respectively. It was proved that the pulp could be pumped and easily classified, separating fraction +1mm of the rejection (3% in weight) with a very low content of limonite.

One kg of nontronitic mineral was taken from a sample of the feeding material of Murrin Murrin plant and loaded to the deaggregation drum of the laboratory that contained the necessary water to obtain a 45% solids pulp, to which 5 kg/t of the additive Al₂(SO₄)₃ -13 H₂O + H₂SO₄ was added.

The drum contained bars (1 - 8 bars) and the opertion lasted 1-10 minutes. The pulp was extracted and classified under one mitimeter (-1 mm). The pulp reported a 45% solids and a viscosity of 90 Pa. The rejection represented the 4% of weight.

A similar assay, but without additive, reported a pulp with 38% solids (classified under 1 mm) and a viscosity of 95 Pa, similar to the pulp produced in the industrial plant of this company.

### Example 16:

The deaggregation drum was prepared with a load of 1 - 8 bars, 1 kg of the niqueliferous clay mineral from the San Felipe deposit and the necessary quantity to obtain 43% of solids. The deaggregation test lasted 1 - 10 minutes, obtaining a final pulp (after classification under 1 mm) of 37% solids and 100 Pa.

The assay was repeated with the addition of 4 kg/t of the additive Al₂(SO₄)₃ . 13 H₂O + H₂SO₄. The final pulp had 43.5% solids and a viscosity of 90 Pa.

### Example 18:

A test was carried out under the same conditions as example 11, but adding the additive Al₂(SO₄)₃ - 13 H₂O + H₂SO₄, dosed as a salt directly to the drum. A pulp was produced with 47% solids and 140 Pa after its classification under 1 mm.

Proceeding to improve the direct pulp preparation with high % solids of limonitic and clay minerals in the pressure acid leaching technology.

## Claims

1. Proceeding to improve the direct pulp production with high % solids of limonitic and clay minerals in the pressure acid leaching, **characterized by** the direc pulp preparation with high % solids (45 - 52%) through the deaggregtion process and the addition or not of additives for minerals containing nickel and cobalt, of the limonitic, nontronitic, smectitic, lateritic minerals and minerals where the clay, serpentine and other minerals content vary from 2 to 60% and the magnesium content varies from 0.1 to 8.0%.

2. Proceeding to improve the direct pulp production with high % solids of limonitic and clay minerals in the pressure acid leaching, according to claim No. 1, **characterized by** a deaggregation process carried out in a drum (balls or bars mill) of 5 liters capacity, helped by a deaggregation element (1 - 8 bars) that supplies a unit low energy for (1- 30 minutes), with controlled agitation (30 - 50 rpm), a load of 1 - 3 kg of mineral and the quantity of water needed to keep the % solids wanted.

3. Proceeding to improve the direct pulp production with high % solids of limonitic and clay minerals in the pressure acid leaching, according to claim No. 2, **characterized by** a deaggregation element can be bars or balls or a fixed element inside the drum or other in such a quantity that can give a low unit energy supply, that for a small drum, can be between 1 and 8 bars or balls, perferibly bars.

4. Proceeding to improve the direct pulp production with high % solids of limonitic and clay minerals in the pressure acid leaching, according to claim No. 1, **characterized by** the deaggregation and the additivion of an additive to the deaggregation drum, among which they are: the Al₂(SO₄)₃ - 13 H₂O + H₂SO₄, MnSO₄H₂SO₄, la ACLIX (leached limonite plus sulfuric acid); (WL) waste liquor from the Ni+ Co precipitation; (ACWA) sulfuric acid + WL and the (ACTAIL) acid liquor of ferric sulfate, resulting from the leaching of tailings from the acid leaching process of limonites.

5. Proceeding to improve the direct pulp production with high % solids of limonitic and clay minerals in the pressure acid leaching, according to claims No. 1 and 2, **characterized by** the direc pulp preparation of limonitic mineral with high % solids (45 - 47%) occurs through the deaggregtion process with no addition of additives. The pulp presented good fluidity for pumping.

6. Proceeding to improve the direct pulp production with high % solids of limonitic and clay minerals in the pressure acid leaching, according to claims No. 1, 2 and 4, **characterized by** the direc pulp preparation of limonitic mineral with high % solids (45-47%) occurs through the deaggregtion process with the addition of an additive ACLIX (leached limonite between (20 - 50 L/t) and from 1 - 9 kg/t of H₂SO₄.

7. Proceeding to improve the direct pulp production with high % solids of limonitic and clay minerals in the pressure acid leaching, according to claims No. 1, 2 and 4 **characterized by** the use of the additive ACWA (47 L/t of WL and 9 kg/t of H₂SO₄).

8. Proceeding to improve the direct pulp production with high % solids of limonitic and clay minerals in the pressure acid leaching, according to claims No. 1, 2 and 4 **characterized by** the use of the additive ACTAIL, constituted by acid liquor (ferric sulfate), resulting from the tailings leaching of the washing plant with H₂SO₄ plus sulfuric acid in a dose of 20 - 50 L/t of acid liquor and 2-5 kg/t of H₂SO₄.

9. Proceeding to improve the direct pulp production with high % solids of limonitic and clay minerals in the pressure acid leaching, according to claims No. 1, 2 and 4 **characterized by** the additive used in the deaggregation process is sulfuric acid (AC) dose 2 - 6 kg/t.

10. Proceeding to improve the direct pulp production with high % solids of limonitic an as sulfide, which is loaded to the deaggregation drum in substitution of the water used to form the pulp.

11. Proceeding to improve the direct pulp production with high % solids of limonitic and clay minerals in the pressure acid leaching, according to claims No. 1, 2 and 4 **characterized by** the additive used is aluminum salts (Al₂(SO₄)₃ - 13 H₂O (0.1 - 5 kg/t and the H₂SO₄ (1-3 kg/t), operating the deaggregation drum under the parameters given.

12. Proceeding to improve the direct pulp production with high % solids of limonitic and clay minerals in the pressure acid leaching, according to claims No. 1, 2 and 4 **characterized by** the additive used is MnSO₄ (1-5 kg/t) and H₂SO₄ (1- 3 kg/t).
